# EUROPEAN PATENT APPLICATION

(11) **EP 3 618 477 A1**
(43) Date of publication of application: **04.03.2020**
(21) Application number: 17907831.6
(22) Date of filing: 08.11.2017
(51) Int. Cl.: H04W 12/06, H04W 48/16, H04W 36/08

(54) **ACCESS DEVICE, AUTHENTICATION SERVER, AND METHOD AND SYSTEM FOR CONTROLLING ACCESS OF TERMINAL DEVICE**

(30) Priority: 27.04.2017 CN 201710288872
(71) Applicant: ZTE Corporation, Shenzhen, Guangdong 518057 (CN)
(72) Inventor: LI, Xiaolong, Shenzhen Guangdong 518057 (CN)
(74) Representative: Angerhausen, Christoph
(86) International application number: PCT/CN2017/109984
(87) International publication number: WO 2018/196329

(57) **Abstract**

Embodiments of the present application provide an access device, an authentication server, and a method and system for controlling access of a terminal device. The method comprises: obtaining a device identifier when detecting that a terminal device requests to access a wireless local area network according to access parameters of the wireless local area network, determining whether the terminal device is an in-network device, and performing different control operations on the terminal device according to different determination results, for example, directly enabling access of the terminal device if the terminal device is an in-network device, and performing authentication by the authentication server and enabling access of the terminal device only when the authentication succeeds if the terminal device is not an in-network device. In this way, even if wireless parameters of an access device that provides the wireless local area network are leaked, access of an illegal terminal device will be rejected due to failed authentication of the terminal device when the illegal terminal device accesses the wireless local area network using the wireless parameters. The present application solves the problem of low security of an existing wireless local area network.

## Description

### CROSS-REFERENCES TO RELATED APPLICATIONS

The present application is filed based on a Chinese patent application with the application No. 201710288872.6, which was filed on April 27, 2017, and claims the priority of the Chinese patent application. The entire disclosure of the Chinese patent application is hereby introduced into the present application for reference.

### TECHNICAL FIELD

The present application relates to the field of a local area network application, and in particular to an access device, an authentication server, a method and system for controlling access of a terminal device, and a computer-readable storage medium.

### BACKGROUND

In real life, there are such application scenes that in order to meet requirements for accessing to a wireless local area network such as WiFi by users, hotels, stations and other businesses will arrange a plurality of access devices, and the WiFis provided by these access devices are connected with each other and overlap each other to achieve seamless coverage of the scenes.

While satisfying the requirements for accessing by the users, the above method will have such a problem that in order to facilitate access of a user terminal to the WiFi, all of the access devices use the same wireless parameters such as WiFi name and password to authenticate the users, and once the WiFi name and password are leaked, other persons may use the WiFi recklessly, which affects the use by normal customers of the businesses, and will bring unnecessary network charges to the businesses.

### SUMMARY

Embodiments of the present application provide an access device, an authentication server, a method and system for controlling access of a terminal device, and a computer-readable storage medium to thereby at least solve the problem of low security caused by only using wireless parameters of a wireless local area network to authenticate users in the prior art.

In accordance with an aspect of the present application, a method for controlling access of a terminal device is provided, the method comprising:
obtaining a device identifier of the terminal device after detecting an access request of the terminal device to access a wireless local area network, the access request being a request to access the wireless local area network initiated by the terminal device according to the access parameters of the wireless local area network;
determining whether the terminal device is an in-network device according to the device identifier of the terminal device and the device identifier of the in-network device; and
performing a control operation corresponding to the determination result on the terminal device.

In accordance with an aspect of the present application, a method for controlling access of a terminal device is provided, the method comprising:
obtaining a device identifier of an in-network device; and
sending the device identifier of the in-network device to an access device of a public local area network, the public local area network being formed by wireless local area networks provided by at least two access devices.

In accordance with an aspect of the present application, a method for controlling access of a terminal device is provided, the method comprising:
an authentication sever obtaining a device identifier of an in-network device, and sending the device identifier of the in-network device to an access device of a public local area network, the public local area network being formed by wireless local area networks provided by at least two access devices; and
the access device obtaining a device identifier of the terminal device after detecting an access request of the terminal device to access a wireless local area network, determining whether the terminal device is an in-network device according to the device identifier of the terminal device and the device identifier of the in-network device, and performing a control operation corresponding to the determination result on the terminal device.

In accordance with an aspect of the present application, an access device is provided, the access device comprising: a communication module and a processor, wherein
the communication module is configured to provide a wireless local area network, and communicate with a terminal device and an authentication server; and
the processor is configured to obtain a device identifier of the terminal device after detecting an access request of the terminal device to access a wireless local area network, determine whether the terminal device is an in-network device according to the device identifier of the terminal device and the device identifier of the in-network device, and perform a control operation corresponding to the determination result on the terminal device.

In accordance with an aspect of the present application, an authentication server is provided, the authentication server comprising: an authentication module and a processor, wherein
the authentication module is configured to communicate with the access device; and
the processor is configured to obtain a device identifier of an in-network device, and send the device identifier of the in-network device to an access device of a public local area network, the public local area network being formed by wireless local area networks provided by at least two access devices.

In accordance with an aspect of the present application, a system for controlling access of terminal device is provided, the system comprising: an authentication server and a plurality of access devices provided by the embodiments of the present application, wireless local area networks of the plurality of access devices forming a pubic local area network; and at least one of the plurality of access devices being the access device provided by the embodiments of the present application, wherein
the authentication sever is configured to obtain a device identifier of an in-network device, and send the device identifier of the in-network device to an access device of a public local area network; and
the access device is configured to obtain a device identifier of the terminal device after detecting an access request of the terminal device to access a wireless local area network, determine whether the terminal device is an in-network device according to the device identifier of the terminal device and the device identifier of the in-network device, and perform a control operation corresponding to the determination result on the terminal device.

In accordance with another aspect of the present application, a computer-readable storage medium is provided, the computer-readable storage medium storing instructions which, when executed by a computer, cause the computer to perform the above-mentioned method for controlling access of a terminal device.

The embodiments of the present application have the following beneficial effects:
The embodiments of the present application provide an access device, an authentication server, a method and system for controlling access of a terminal device, and a computer-readable storage medium. The method comprises: obtaining a device identifier when detecting that a terminal device requests to access a wireless local area network according to access parameters of the wireless local area network, determining whether the terminal device is an in-network device, and performing different control operations on the terminal device according to different determination results, for example, directly enabling access of the terminal device if the terminal device is an in-network device, and performing authentication by the authentication server and enabling access of the terminal device only when the authentication succeeds if the terminal device is not an in-network device. In this way, even if wireless parameters of an access device that provides the wireless local area network are leaked, access of an illegal terminal device will be rejected due to failed authentication of the terminal device when the illegal terminal device accesses the wireless local area network using the wireless parameters. The present application solves the problem of low security of a wireless local area network caused by the access parameter leakage, which exists in that the existing access device only authenticates the access parameters of the wireless local area network, enabling an illegal user to access the wireless local area network at any time.

### BRIEF DESCRIPTION OF DRAWINGS

FIG. 1 is a schematic diagram of networking of a system for controlling access of a terminal device provided in a first embodiment of the present application;
FIG. 2 is a structural block diagram of an access device provided in the first embodiment of the present application;
FIG. 3 is a first flowchart of a method for controlling access of a terminal device provided in the first embodiment of the present application;
FIG. 4 is a second flowchart of the method for controlling access of a terminal device provided in the first embodiment of the present application;
FIG. 5 is a schematic diagram of networking of the system for controlling access of a terminal device provided in a second embodiment of the present application;
FIG. 6 is a structural block diagram of the access device provided in the second embodiment of the present application;
FIG. 7 is a structural block diagram of an authentication server provided in the second embodiment of the present application;
FIG. 8 is a flowchart of the method for controlling access of a terminal device provided in the second embodiment of the present application;
FIG. 9 is an overall flowchart of the method for controlling access of a terminal device provided in the second embodiment of the present application on an access device side;
FIG. 10 is a second flowchart of the method for controlling access of a terminal device provided in the second embodiment of the present application on the access device side;
FIG. 11 is a first flowchart of the method for controlling access of a terminal device provided in the second embodiment of the present application on an authentication server side;
FIG. 12 is a second flowchart of the method for controlling access of a terminal device provided in the second embodiment of the present application on the authentication server side;
FIG. 13 is a schematic diagram of networking of the system for controlling access of a terminal device provided in a third embodiment of the present application;
FIG. 14 is a first flowchart of the method for controlling access of a terminal device provided in the third embodiment of the present application;
FIG. 15 is a second flowchart of the method for controlling access of a terminal device provided in the third embodiment of the present application;
FIG. 16 is a schematic diagram of determination of a wireless local area network to which a terminal belongs involved in an embodiment of the present application;
FIG. 17 is a schematic diagram of formation of a public local area network by wireless local area networks involved in the embodiment of the present application; and
FIG. 18 is a first flowchart of the method for controlling access of a terminal device provided in the second embodiment of the present application on the access device side.

### Detailed Description

The embodiments of the present application will be clearly and completely described below by taking the figures in the embodiments of the present application into consideration. It is apparent that the described embodiments are only part of the embodiments, rather than all of the embodiments of the present application. All the other embodiments obtained by those skilled in the art based on the embodiments in the present application without making inventive efforts fall within the protection scope of the present application.

The present application is mainly used in application scenes such as hotels and shopping malls. In these scenes, it is required to make small-scale wireless local area networks provided by a plurality of access devices form a large-scale local area network. Hereinafter, the large-scale local area network is called the current local area network. In practical applications, the coverage areas of the wireless local area networks provided by adjacent access devices may overlap, and with respect to this phenomenon, the present application provides a new manner of dividing wireless local area networks to which terminal devices belong.

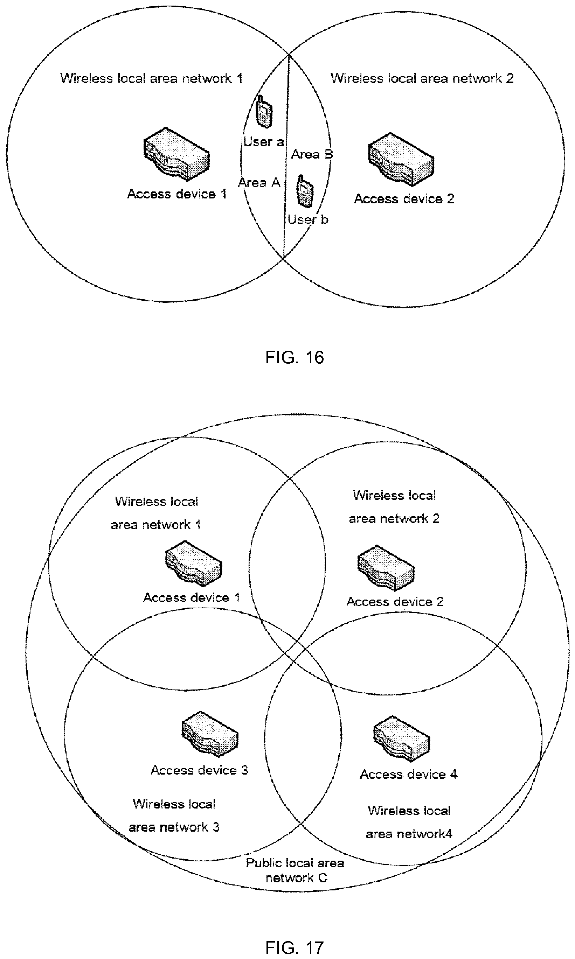

To be specific, as shown in FIG. 16, an access device 1 and an access device 2 respectively provide a wireless local area network 1 and a wireless local area network 2 that partially overlap each other. In the overlapping area, the connection of the ranges of the wireless local area networks constitutes a boundary between the wireless local area networks to which the terminal devices belong, a terminal device **a** in the range of an area **A** belongs to the wireless local area network 1, and a terminal device **b** in an area **B** belongs to the wireless local area network 2; such manner of dividing wireless local area networks to which terminal devices belong is simple.

To be specific, as shown in FIG. 17, an access device 1, an access device 2, an access device 3, and an access device 4 respectively provide a wireless local area network 1, a wireless local area network 2, a wireless local area network 3, and a wireless local area network 4, and after the wireless local area network 1, the wireless local area network 2, the wireless local area network 3, and the wireless local area network 4 overlap or cover each other, a public local area network **C** is formed. With respect to the access device 1, the access devices 2-4 are the other access devices forming the public local area network, and with respect to the authentication server, the determined access devices of the public local area network **C** include the access device 1, the access device 2, the access device 3, and the access device 4.

In practical applications, a first predetermined time period and a second predetermined time period involved in the present application may be set according to experience and requirements. For example, the first predetermined time period may be set to a time, which is generally 10 minutes, taken by a normal user to walk from the range of the first wireless local area network to the range of the second wireless local area network, and the second predetermined time period can be set to a time, e.g., 24 hours, during which the normal user goes out to work.

In practical applications, the device identifier involved in the present application refers to a unique parameter that can determine the identity of the user, e.g., an MAC address (Media Access Control address) of the device, and a phone number corresponding to an SIM (Subscriber Identity Module) card in the device.

In practical applications, the in-network device involved in the present application refers to a device that has accessed to the small-scale wireless local area network provided by an access device in the range of the current local area network, so correspondingly, the terminal device being the in-network device represents that the terminal device has undergone a switching behavior of switching from the wireless local area network 1 to the wireless local area network 2 or the like in the public local area network **C,** or a behavior of re-accessing the local area network of returning after leaving the public local area network C for a short time period (less than the second predetermined time period), while the terminal device being not the in-network device represents that the terminal device has undergone a behavior of accessing the wireless local area network in the public local area network **C** for the first time, or a behavior of re-accessing the local area network of returning after leaving the public local area network **C** overtime (larger than the second predetermined time period).

In practical applications, the device identifier of the in-network device involved in the present application may be implemented in a manner of setting legal users, wherein the manner of setting legal users refers to setting some users to legal users, the device identifiers of these users being recorded as the device identifiers of the legal users, and the device identifier of the in-network device just specifically refers to the device identifier of the legal user. The specific implementation is described as follows, and no unnecessary details are given herein.

The present application is further illustrated by the specific implementations in combination with the figures.

### First embodiment:

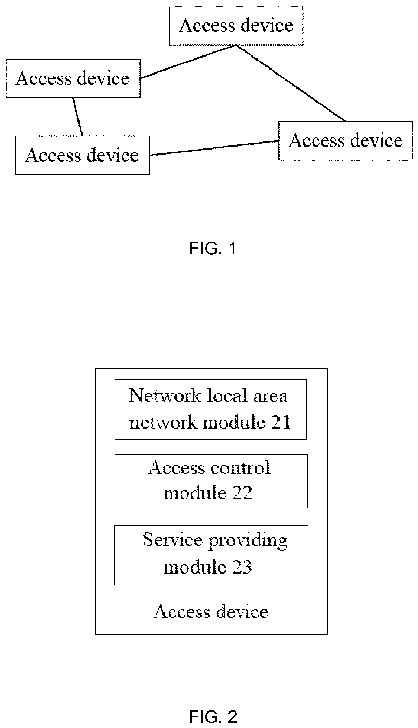

FIG. 1 is a schematic diagram of networking of a system for controlling access of a terminal device provided in a first embodiment of the present application. It can be seen from FIG. 1 that the system for controlling access of a terminal device provided in this embodiment comprises: a plurality of access devices, wireless local area networks of the plurality of access devices forming a pubic local area network, wherein the access devices communicate directly or indirectly by a third-party device and perform data interaction; and
the access device is configured to provide a wireless local area network; obtain a device identifier of the terminal device after detecting an access request of the terminal device to access a wireless local area network, determine whether the device identifier is the device identifier of the in-network device, and enable access of the terminal device to the wireless local area network, and provide a wireless access service for the terminal device if the device identifier is the device identifier of the in-network device, wherein the access request is a request to access the wireless local area network initiated by the terminal device according to the access parameters of the wireless local area network, e.g., network name and access password. In this way, as compared with the prior art, the method provided by the present application at least has the following advantages: after the access request of the terminal device is authenticated, it is further required to authenticate the device identifier of the terminal device, and the access of the terminal device is enabled only when the device identifier is the identifier of the device allowed to make an access, so even if wireless parameters of an access device that provides the wireless local area network are leaked, access of an illegal terminal device will be rejected due to the lack of the device identifier of the in-network device of the terminal device when the illegal terminal device accesses the wireless local area network using the wireless parameters, which solves the problem of low security of a wireless local area network caused by the access parameter leakage, which problem exists in that the existing access device only authenticates the access parameters of the wireless local area network, enabling an illegal user to access the wireless local area network at any time.

FIG. 2 is a structural block diagram of an access device provided in the first embodiment of the present application. It can be seen from FIG. 2 that the access device provided in this embodiment comprises: a network local area network module 21, an access control module 22 and a service providing module 23, wherein
the network local area network module 21 is configured to provide a wireless local area network;
the access control module 22 is configured to obtain a device identifier of the terminal device after detecting an access request of the terminal device to access a wireless local area network, determine whether the device identifier is the device identifier of the in-network device, and if so, trigger the service providing module 23 to enable access of the terminal device to the wireless local area network, the access request being a request to access the wireless local area network initiated by the terminal device according to the access parameters of the wireless local area network; and
the service providing module 23 is configured to enable access of the terminal device to the wireless local area network, and provide a wireless access service for the terminal device.

In some embodiments, the access device in the above-mentioned embodiment further comprises a storage module, wherein
the storage module is configured to store a legal user information list, the legal user information list including at least one legal user information item, which includes a device identifier and resource usage information of a legal user, the resource usage information including at least one of traffic and online-time for the terminal to access the Internet; and
the access control module 22 is configured to call the legal user information list, and search for a legal user information item matching the corresponding device identifier in the legal user information list; the device identifier being one that conforms to a preset rule if the legal user information item matching the corresponding device identifier is found; the device identifier being not the device identifier of the in-network identifier if the legal user information item matching the corresponding device identifier is not found.

In some embodiments, the access control module 22 in the above-mentioned embodiment, after providing the wireless access service for the terminal device, is further configured to: detect whether the terminal device leaves the wireless local area network; determine whether terminal access information is received within a first predetermined time period after detecting that the terminal device leaves the wireless local area network, wherein the terminal access information is generated after other access devices forming a public local area network provide the wireless access service for the terminal device, and the public local area network is formed by wireless local area networks provided by at least two access devices; consider that the terminal device leaves the public local area network, and determine whether the terminal device re-accesses the public local area network within a second predetermined time period if the terminal access information is not received; and delete the legal user information item matching the device identifier in the legal user information list, and send the updated legal user information list to the other access devices forming the public local area network directly or by a third-party device if the terminal device does not re-access the public local area network.

In some embodiments, the access control module 22 in the above-mentioned embodiment, after determining whether the terminal access information is received within the first predetermined time period, is further configured to: update the resource usage information, and send the updated resource usage information to the other access devices forming the public local area network directly or by a third-party device if the terminal access information is received within the first predetermined time period; or the access control module, after determining whether the terminal device re-accesses the current local area network within the second predetermined time period, is further used to: update the resource usage information, and send the updated resource usage information to the other access devices forming the public local area network directly or by a third-party device if the terminal device re-accesses the current local area network within the second predetermined time period.

In some embodiments, the access control module 22 in the above-mentioned embodiment, after determining whether the device identifier is the device identifier of the in-network device, is further configured to: obtain identity authentication information of the terminal device if the device identifier is not the device identifier of the in-network device; authenticate the identity authentication information; and allow the terminal device to access the wireless local area network if the authentication succeeds. In practical applications, the identity authentication information is required to carry identity authentication parameters assigned to the legal users by the provider of the public local area network, e.g., login accounts and login passwords configured for guests by a hotel front desk, and can be used to identify the user identity to thereby determine whether the user is legal, which login accounts and login passwords are not access accounts and passwords of the wireless local area network (WiFi) provided by access devices (e.g., routers).

In some embodiments, when the access device in the above-mentioned embodiment comprises the storage module, the access control module 22, after allowing the terminal device to access the wireless local area network, is further configured to: obtain the resource usage information of the terminal device; correspondingly store the device identifier of the terminal device and the resource usage information as a legal user information item, which is updated to the legal user information list; and send the updated legal user information list to the other access devices forming the public local area network directly or by a third-party device.

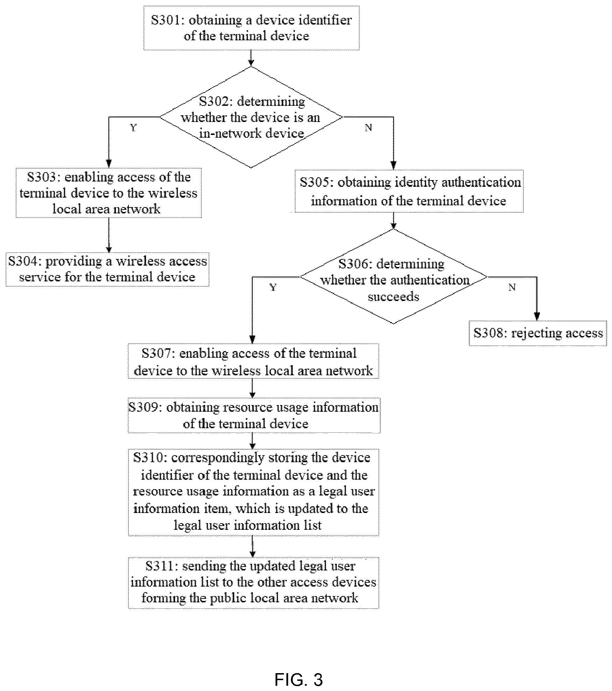

FIG. 3 is a first flowchart of a method for controlling access of a terminal device provided in the first embodiment of the present application. It can be seen from FIG. 3 that the method for controlling access of a terminal device provided in this embodiment comprises:
S301: obtaining a device identifier of the terminal device after detecting an access request of the terminal device to access a wireless local area network, the access request being a request to access the wireless local area network initiated by the terminal device according to the access parameters of the wireless local area network;
S302: determining whether the device identifier is the device identifier of the in-network device; if so, performing the step S303, and if not, performing the step S305;
S303: enabling access of the terminal device to the wireless local area network; and
S304: providing a wireless access service for the terminal device.

In some embodiments, as shown in FIG. 3, the method in the above-mentioned embodiment, after the step S302, further comprises:
S305: obtaining identity authentication information of the terminal device if the device identifier is not the device identifier of the in-network device;
S306: authenticating the identity authentication information; performing the step S307 if the authentication succeeds; performing the step S308 if the authentication fails;
S307: enabling access of the terminal device to the wireless local area network; and
S308: rejecting access of the terminal device to the wireless local area network.

In some embodiments, when the legal user information list is called, as shown in FIG. 3, the method in the above-mentioned embodiment, after the step S307, further comprises:
S309: obtaining resource usage information of the terminal device;
S310: correspondingly storing the device identifier of the terminal device and the resource usage information as a legal user information item, which is updated to the legal user information list; and
S311: sending the updated legal user information list to the other access devices forming the public local area network directly or by a third-party device.

In some embodiments, the step S302 in the above-mentioned embodiment comprises:
calling the legal user information list, the legal user information list including at least one legal user information item, which includes a device identifier and resource usage information of a legal user, the resource usage information including at least one of traffic and online-time for the terminal to access the Internet;
searching for a legal user information item matching the device identifier in the legal user information list;
the device identifier being the device identifier of the in-network network if the legal user information item matching the device identifier is found; and
the device identifier being not the device identifier of the in-network network if the legal user information item matching the device identifier is not found.

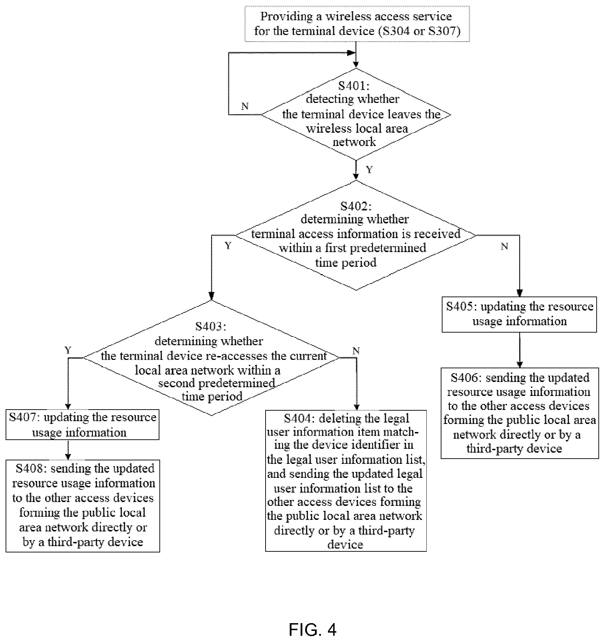

FIG. 4 is a second flowchart of the method for controlling access of a terminal device provided in the first embodiment of the present application. It can be seen from FIG. 4 that the method for controlling access of a terminal device provided in this embodiment, after providing a wireless access service for the terminal device (S304 or S307), further comprises:
S401: periodically detecting whether the terminal device leaves the wireless local area network; performing the step S402 if the terminal device leaves the wireless local area network, and returning to perform the step S401 if the terminal device does not leave the wireless local area network;
S402: determining whether terminal access information is received within a first predetermined time period after detecting that the terminal device leaves the wireless local area network, wherein the terminal access information is generated after other access devices forming a public local area network provide the wireless access service for the terminal device; considering that the terminal device leaves the public local area network, and performing the step S403 if the terminal access information is not received, and performing the step S405 if the terminal access information is received within the first predetermined time period;
S403: determining whether the terminal device re-accesses the current local area network within a second predetermined time period; performing the step S404 if the terminal device does not re-access the public local area network; and performing the step S407 if the terminal device re-accesses the public local area network within the second predetermined time period;
S404: deleting the legal user information item matching the device identifier in the legal user information list, and sending the updated legal user information list to the other access devices forming the public local area network directly or by a third-party device.

In some embodiments, as shown in FIG. 4, the method in the above-mentioned embodiment, after the step S402, further comprises:
S405: updating the resource usage information if the terminal access information is received within the first predetermined time period; and
S406: sending the updated resource usage information to the other access devices forming the public local area network directly or by a third-party device.

In some embodiments, as shown in FIG. 4, the method in the above-mentioned embodiment, after the step S403, further comprises:
S407: updating the resource usage information if the terminal device re-accesses the current local area network within the second predetermined time period; and
S408: sending the updated resource usage information to the other access devices forming the public local area network directly or by a third-party device.

### Second embodiment:

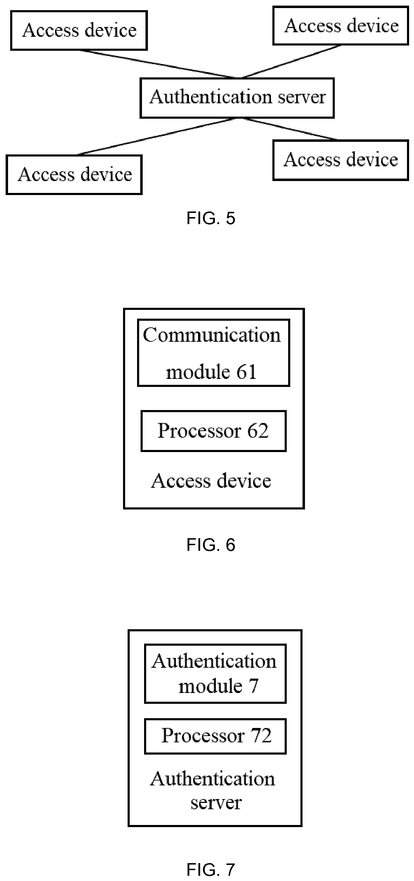

FIG. 5 is a schematic diagram of networking of the system for controlling access of a terminal device provided in a second embodiment of the present application. It can be seen from FIG. 5 that the system for controlling access of a terminal device provided in this embodiment comprises: an authentication server and a plurality of access devices, wireless local area networks of the plurality of access devices forming a pubic local area network, and the access devices communicating directly or indirectly with each other and performing data interaction, wherein
the authentication sever is used to obtain a device identifier of an in-network device, and send the device identifier of the in-network device to an access device of a public local area network; and
the access device is used to obtain a device identifier of the terminal device after detecting an access request of the terminal device to access a wireless local area network, determine whether the terminal device is an in-network device according to the device identifier of the terminal device and the device identifier of the in-network device, and perform a control operation corresponding to the determination result on the terminal device.

In practical applications, when the determination result of the access device determining whether the terminal device is an in-network device is negative, identity authentication information of the terminal device is obtained, and the identity authentication information is sent to an authentication server;
at this time, the authentication service is further used to authenticate the identity authentication information, and send the authentication result to the access device; and
the access device is further used to enable access of the terminal device to the wireless local area network, and provide a wireless access service to the terminal device when the authentication result is that the authentication succeeds.

FIG. 6 is a structural block diagram of the access device provided in the second embodiment of the present application. It can be seen from FIG. 6 that the access device provided in this embodiment comprises: a communication module 61 and a processor 62, wherein
the communication module 61 is configured to provide a wireless local area network, and communicate with at least one terminal device and an authentication server; and
the processor 62 is configured to obtain a device identifier of the terminal device after detecting an access request of the terminal device to access a wireless local area network, determine whether the terminal device is an in-network device according to the device identifier of the terminal device and the device identifier of the in-network device, and perform a control operation corresponding to the determination result on the terminal device, the access request being a request to access the wireless local area network initiated by the terminal device according to the access parameters of the wireless local area network.

In some embodiments, the processor 62 in the above-mentioned embodiment is configured to determine whether the terminal device is an in-network device, if not, obtain identity authentication information of the terminal device, send the identity authentication information to an authentication server, receive an authentication result returned by the authentication server, and enable access of the terminal device to the wireless local area network, and provide a wireless access service to the terminal device when the authentication result is that the authentication succeeds.

In some embodiments, the communication module 61 in the above-mentioned embodiment is configured to receive a legal user information list delivered by the authentication server, the legal user information list including at least one legal user information item, which includes a device identifier of a legal user; and the processor 62 is configured to use the device identifier of the legal user as the device identifier of the in-network device. At this time, the processor 62 is configured to call the legal user information list, and search for a legal user information item matching the device identifier in the legal user information list, the terminal device being the in-network device if the legal user information item matching the device identifier is found, and the terminal device being not the in-network device if the legal user information item matching the device identifier is not found. In practical applications, the legal user information item includes the device identifier and resource usage information of the legal user, and the resource usage information including at least one of traffic and online-time for the terminal to access the Internet, so the processor 62 can provide the wireless access service for the terminal device according to the resource usage information.

In some embodiments, the processor 62 in the above-mentioned embodiment is further configured to detect whether the terminal device leaves the wireless local area network after providing the wireless access service for the terminal device; determine whether the communication module 61 receives terminal access information within a first predetermined time period after detecting that the terminal device leaves the wireless local area network, wherein the terminal access information is generated after other access devices forming a public local area network provide the wireless access service for the terminal device, and the public local area network is formed by wireless local area networks provided by at least two access devices; consider that the terminal device leaves the current local area network, and send a user off-network message to the authentication server by the communication module if the terminal access information is not received, the user off-network message being used to trigger the authentication server to determine whether the terminal device re-accesses the public local area network within a second predetermined time period; and replace the stored legal user information list with a new legal user information list if the new legal user information list fed back by the authentication server is received by the communication module.

In some embodiments, the access device in the above-mentioned embodiment comprises: a communication bus, a communication unit, a processor, a memory, and a computer program stored on the memory and operable on the processor, wherein
the communication bus is configured to achieve a communication connection between the communication unit, the processor and the memory;
the communication unit is configured to provide a wireless local area network and to communicate with the terminal device and the authentication server;
the processor is configured to execute the computer program to implement the following steps:
obtaining a device identifier of the terminal device after detecting an access request of the terminal device to access a wireless local area network;
determining whether the terminal device is an in-network device according to the device identifier of the in-network device from the authentication server;
if not, obtaining identity authentication information of the terminal device, and sending the identity authentication information to the authentication server; and
receiving an authentication result returned by the authentication server, and enabling access of the terminal device to the wireless local area network, and providing a wireless access service to the terminal device when the authentication result is that the authentication succeeds.

In some embodiments, the processor in the above-mentioned embodiment is further configured to execute the computer program to implement the following steps:
receiving a legal user information list delivered by the authentication server;
using the device identifier of the legal user as the device identifier of the in-network device;
calling the legal user information list, and searching for a legal user information item matching the device identifier in the legal user information list; and
the terminal device being the in-network device if the legal user information item matching the device identifier is found, and the terminal device being not the in-network device if the legal user information item matching the device identifier is not found.

In some embodiments, the processor in the above-mentioned embodiment is further configured to execute the computer program to implement the following steps:
detecting whether the terminal device leaves the wireless local area network after providing a wireless access service for the terminal device;
determining whether the communication module receives terminal access information within a first predetermined time period after detecting that the terminal device leaves the wireless local area network, wherein the terminal access information is generated after other access devices forming a public local area network provide the wireless access service for the terminal device, and the public local area network is formed by wireless local area networks provided by at least two access devices;
considering that the terminal device leaves the public local area network, and sending a user off-network message to the authentication server by the communication module if the terminal access information is not received, the user off-network message being used to trigger the authentication server to determine whether the terminal device re-accesses the public local area network within a second predetermined time period; and
replacing the stored legal user information list with a new legal user information list if the new legal user information list fed back by the authentication server is received by the communication module.

In some embodiments, the embodiment of the present application further provides a computer-readable storage medium, which stores one or more programs that are executable to implement the following steps:
obtaining a device identifier of the terminal device after detecting an access request of the terminal device to access a wireless local area network;
determining whether the terminal device is an in-network device according to the device identifier of the in-network device from the authentication server;
if not, obtaining identity authentication information of the terminal device, and sending the identity authentication information to the authentication server; and
receiving an authentication result returned by the authentication server, and enabling access of the terminal device to the wireless local area network, and providing a wireless access service to the terminal device when the authentication result is that the authentication succeeds.

In some embodiments, the one or more programs in the above-mentioned embodiment are executable to achieve the following steps:
receiving a legal user information list delivered by the authentication server;
using the device identifier of the legal user as the device identifier of the in-network device;
calling the legal user information list, and searching for a legal user information item matching the device identifier in the legal user information list; and
the terminal device being the in-network device if the legal user information item matching the device identifier is found, and the terminal device being not the in-network device if the legal user information item matching the device identifier is not found.

In some embodiments, one or more programs in the above-mentioned embodiment are executable to achieve the following steps:
detecting whether the terminal device leaves the wireless local area network after providing a wireless access service for the terminal device;
determining whether the communication module receives terminal access information within a first predetermined time period after detecting that the terminal device leaves the wireless local area network, wherein the terminal access information is generated after other access devices forming a public local area network provide the wireless access service for the terminal device, and the public local area network is formed by wireless local area networks provided by at least two access devices;
considering that the terminal device leaves the public local area network, and sending a user off-network message to the authentication server by the communication module if the terminal access information is not received, the user off-network message being used to trigger the authentication server to determine whether the terminal device re-accesses the public local area network within a second predetermined time period; and
replacing the stored legal user information list with a new legal user information list if the new legal user information list fed back by the authentication server is received by the communication module.

FIG. 7 is a structural block diagram of an authentication server provided in the second embodiment of the present application. It can be seen from FIG. 7 that the authentication server provided in this embodiment comprises: an authentication module 71 and a processor 72, wherein
the authentication module 71 is configured to communication with the access device; and
the processor 72 is configured to obtain a device identifier of an in-network device, and send the device identifier of the in-network device to an access device of a public local area network, the public local area network being formed by wireless local area networks provided by at least two access devices, wherein the device identifier of the in-network device is used to authenticate the obtained device identifier of the terminal device after the access device receives the access request of the terminal device to access a wireless local area network, enable access of the terminal device to the wireless local area network and provide the wireless access service to the terminal device only when the terminal device is the in-network device, perform authentication by the authentication server when the terminal device is not the in-network device and enable access of the terminal device only when the authentication succeeds; the access request is a request to access the wireless local area network initiated by the terminal device according to the access parameters of the wireless local area network, and the public local area network is formed by wireless local area networks provided by at least two access devices.

In some embodiments, the processor 72 in the above-mentioned embodiment is configured to: determine the access devices forming the public local area network; construct a legal user information list including at least one legal user information item, the legal user information item including a device identifier of a legal user; and send the legal user information list to the access device. In practical applications, in order to make it convenient for the access device to provide the access service for the terminal device, the legal user information item includes the device identifier and resource usage information of the legal user, the resource usage information including at least one of traffic and online-time for the terminal to access the Internet.

In some embodiments, the processor 72 in the above-mentioned embodiment, after sending the legal user information list to the access device, is further configured to: receive, by the authentication module, a user off-network message sent by the access device; determine whether a terminal device corresponding to the user off-network message re-accesses the public local area network within a second predetermined time period; if not, delete the legal user information item matching the device identifier in the legal user information list, and generate a new legal user information list; and send the new legal user information list to the access device.

In some embodiments, the authentication module 71 in the above-mentioned embodiment is configured to: receive a device identifier of a legal user configured by an administrator as the device identifier of the in-network device; and/or receive identity authentication information sent by the access device, authenticate the identity authentication information, and use the device identifier corresponding to the identity authentication information as the device identifier of the in-network device if the authentication succeeds.

In some embodiments, the authentication server in the above-mentioned embodiment comprises: a communication bus, a communication unit, a processor, a memory and a computer program stored on the memory and operable on the processor, wherein
the communication bus is configured to achieve a communication connection between the communication unit, the processor and the memory;
the communication unit is configured to communicate with the access device;
the processor is configured to execute the computer program to implement the following steps:
obtaining a device identifier of the in-network device; and
sending the device identifier of the in-network device to an access device of a public local area network, the public local area network being formed by wireless local area networks provided by at least two access devices.

In some embodiments, the processor in the above-mentioned embodiment is further configured to execute the computer program to implement the following steps:
determining the access devices forming the public local area network;
constructing a legal user information list including at least one legal user information item, the legal user information item including the device identifier and resource usage information of the legal user, the resource usage information including at least one of traffic and online-time for the terminal to access the Internet; and
sending the legal user information list to the access device.

In some embodiments, the processor in the above-mentioned embodiment is further configured to execute the computer program to implement the following steps:
receiving a user off-network message sent by the access device after sending the legal user information list to the access device;
determining whether a terminal device corresponding to the user off-network message re-accesses the public local area network within a second predetermined time period;
if not, deleting the legal user information item matching the device identifier in the legal user information list, and generating a new legal user information list; and
sending the new legal user information list to the access device.

In some embodiments, the processor in the above-mentioned embodiment is further configured to execute the computer program to implement the following steps:
receiving a device identifier of a legal user configured by an administrator as the device identifier of the in-network device; and/or
receiving identity authentication information sent by the access device, authenticating the identity authentication information, and using the device identifier corresponding to the identity authentication information as the device identifier of the in-network device if the authentication succeeds.

In some embodiments, the embodiment of the present application further provides a computer-readable storage medium, which stores one or more programs that are executable to implement the following steps:
obtaining a device identifier of the in-network device; and
sending the device identifier of the in-network device to an access device of a public local area network, the public local area network being formed by wireless local area networks provided by at least two access devices.

In some embodiments, the one or more programs in the above-mentioned embodiment are executable to achieve the following steps:
determining the access devices forming the public local area network;
constructing a legal user information list including at least one legal user information item, the legal user information item including the device identifier and resource usage information of the legal user, the resource usage information including at least one of traffic and online-time for the terminal to access the Internet; and
sending the legal user information list to the access device.

In some embodiments, the one or more programs in the above-mentioned embodiment are executable to achieve the following steps:
receiving a user off-network message sent by the access device after sending the legal user information list to the access device;
determining whether a terminal device corresponding to the user off-network message re-accesses the public local area network within a second predetermined time period;
if not, deleting the legal user information item matching the device identifier in the legal user information list, and generating a new legal user information list; and
sending the new legal user information list to the access device.

In some embodiments, the one or more programs in the above-mentioned embodiment are executable to implement the following steps:
receiving a device identifier of a legal user configured by an administrator as the device identifier of the in-network device; and/or
receiving identity authentication information sent by the access device, authenticating the identity authentication information, and using the device identifier corresponding to the identity authentication information as the device identifier of the in-network device if the authentication succeeds.

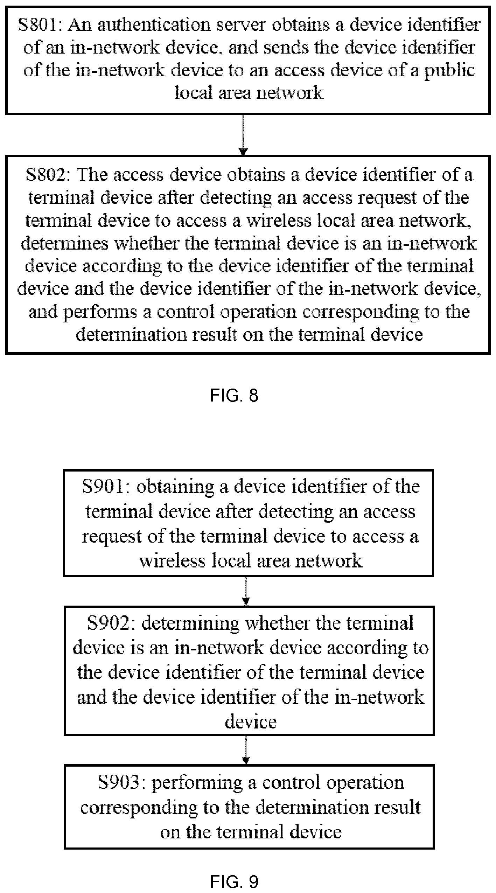

FIG. 8 is a flowchart of the method for controlling access of a terminal device provided in the second embodiment of the present application. It can be seen from FIG. 8 that the method for controlling access of a terminal device provided in this embodiment comprises:
S801: an authentication server obtains a device identifier of an in-network device, and sends the device identifier of the in-network device to an access device of a public local area network, the public local area network being formed by wireless local area networks provided by at least two access devices; and
S802: the access device obtains a device identifier of a terminal device after detecting an access request of the terminal device to access a wireless local area network, determines whether the terminal device is an in-network device according to the device identifier of the terminal device and the device identifier of the in-network device, and performs a control operation corresponding to the determination result on the terminal device.

FIG. 9 is an overall flowchart of the method for controlling access of a terminal device provided in the second embodiment of the present application on an access device side. It can be seen from FIG. 9 that the reflection of the method for controlling access of a terminal device provided in this embodiment on the access device side comprises:
S901: obtaining a device identifier of the terminal device after detecting an access request of the terminal device to access a wireless local area network;
S902: determining whether the terminal device is an in-network device according to the device identifier of the terminal device and the device identifier of the in-network device; and
S903: performing a control operation corresponding to the determination result on the terminal device.

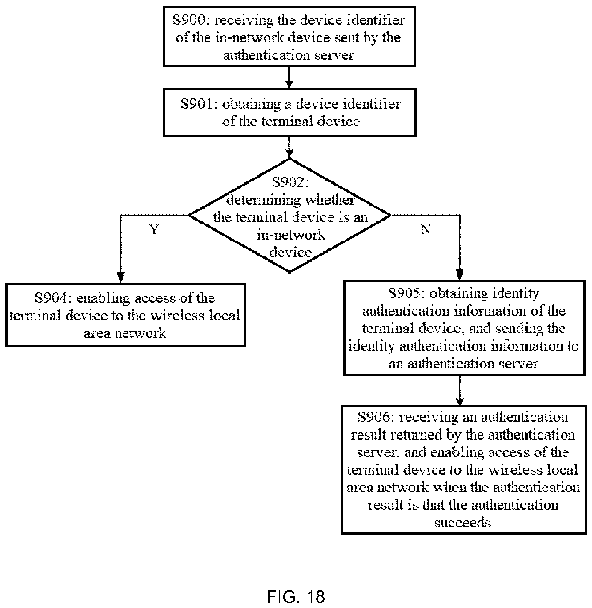

FIG. 18 is a first flowchart of the method for controlling access of a terminal device provided in the second embodiment of the present application on the access device side. It can be seen from FIG. 18 that the reflection of the method for controlling access of a terminal device provided in this embodiment on the access device side comprises:
S901: obtaining a device identifier of the terminal device after detecting an access request of the terminal device to access a wireless local area network, the access request being a request to access the wireless local area network initiated by the terminal device according to the access parameters of the wireless local area network;
S902: determining whether the terminal device is an in-network device according to the device identifier of the in-network device; if so, performing the step S904, and if not, performing the step S905;
S904: enabling access of the terminal device to the wireless local area network, and providing a wireless access service to the terminal device;
S905: obtaining identity authentication information of the terminal device, and sending the identity authentication information to an authentication server; and
S906: receiving an authentication result returned by the authentication server, and enabling access of the terminal device to the wireless local area network, and providing a wireless access service to the terminal device when the authentication result is that the authentication succeeds.

In FIG. 18, the steps S904 to S906 are the specific contents of the step S903.

It can be seen from FIG. 18 that in some embodiments, the method in the above-mentioned embodiment, before the step S902, further comprises:
S900: receiving a legal user information list delivered by the authentication server, the legal user information list including at least one legal user information item, which includes a device identifier of a legal user, and using the device identifier of the legal user as the device identifier of the in-network device. In practical applications, the legal user information item further includes resource usage information of a legal user, the resource usage information including at least one of traffic and online-time for the terminal to access the Internet.

In some embodiments, the step S902 in the above-mentioned embodiment comprises:
calling the legal user information list, and searching for a legal user information item matching the device identifier in the legal user information list;
the device identifier being the device identifier of the in-network network if the legal user information item matching the device identifier is found; and
the device identifier being not the device identifier of the in-network network if the legal user information item matching the device identifier is not found.

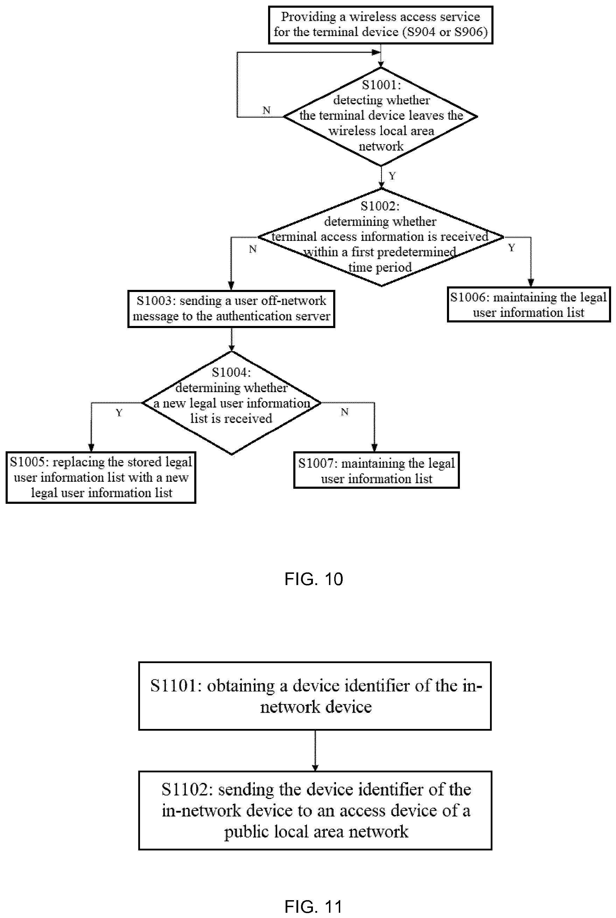

FIG. 10 is a second flowchart of the method for controlling access of a terminal device provided in the second embodiment of the present application on the access device side. It can be seen from FIG. 10 that the reflection of the method for controlling access of a terminal device provided in this embodiment on the access device side, after providing a wireless access service for the terminal device (S904 or S906), further comprises:
S1001: periodically detecting whether the terminal device leaves the wireless local area network; performing the step S1002 if the terminal device leaves the wireless local area network, and returning to perform the step S1001 if the terminal device does not leave the wireless local area network;
S1002: determining whether terminal access information forwarded by the authentication server is received within a first predetermined time period after detecting that the terminal device leaves the wireless local area network, the terminal access information being generated after other access devices forming a public local area network provide the wireless access service for the terminal device; performing the step S1003 if the terminal access information is not received, and performing the step S1006 if the terminal access information is received;
S1003: considering that the terminal device leaves the public local area network, and sending a user off-network message to the authentication server if the terminal access information is not received, the user off-network message being used to trigger the authentication server to determine whether the terminal device re-accesses the public local area network within a second predetermined time period;
S1004: waiting for the second predetermined time period, and determining whether a new legal user information list is received; performing the step S1005 if the new legal user information list is received, and performing the step S1007 if the new legal user information list is not received;
S1005: replacing the stored legal user information list with a new legal user information list, if the new legal user information list fed back by the authentication server is received;
S1006: considering that the user terminal re-accesses the other wireless local area networks of the public local area network within the first predetermined time period and maintaining the legal user information list, if the terminal access information is received; and
S1007: considering that the user terminal re-accesses the public local area network within the second predetermined time period and maintaining the legal user information list, if the new legal user information list has not been received yet after a response message on the authentication server side is received.

FIG. 11 is a first flowchart of the method for controlling access of a terminal device provided in the second embodiment of the present application on an authentication server side. It can be seen from FIG. 11 that the reflection of the method for controlling access of a terminal device provided in this embodiment on the authentication server side comprises:
S1101: obtaining a device identifier of the in-network device; authenticating whether the terminal device is an in-network device after receiving the access request of the terminal device to access a wireless local area network; and
S1102: sending the device identifier of the in-network device to an access device of a public local area network, the public local area network being formed by wireless local area networks provided by at least two access devices.

In some embodiments, the step S1101 in the above-mentioned embodiment comprises:
receiving a device identifier of a legal user configured by an administrator as the device identifier of the in-network device; and/or
receiving identity authentication information sent by the access device, authenticating the identity authentication information, and using the device identifier corresponding to the identity authentication information as the device identifier of the in-network device if the authentication succeeds.

In some embodiments, the step S1102 in the above-mentioned embodiment comprises:
determining the access devices forming the public local area network;
constructing a legal user information list including at least one legal user information item, the legal user information item including a device identifier of a legal user, where in practical applications, the legal user information item further includes resource usage information of a legal user, the resource usage information including at least one of traffic and online-time for the terminal to access the Internet; and
sending the legal user information list to the access device.

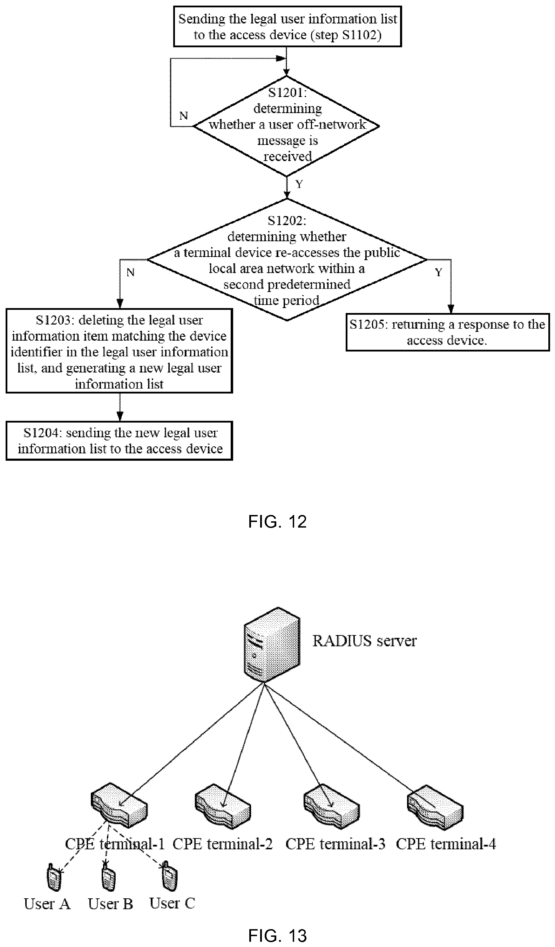

FIG. 12 is a second flowchart of the method for controlling access of a terminal device provided in the second embodiment of the present application on the authentication server side. It can be seen from FIG. 12 that the reflection of the method for controlling access of a terminal device provided in this embodiment on the authentication server side, after sending the legal user information list to the access device (step S1102), further comprises:
S1201: periodically determining whether a user off-network message sent by the access device is received; if so, performing the step S1202; if not, returning to perform the step S1201;
S1202: determining whether a terminal device corresponding to the user off-network message re-accesses the public local area network within a second predetermined time period; if not, considering that the user terminal leaves the public local area network, and performing the step S1203, and if so, considering that the user terminal re-accesses the public local area network, and performing the step S1205;
S1203: if not, deleting the legal user information item matching the device identifier in the legal user information list, and generating a new legal user information list;
S1204: sending the new legal user information list to the access device; and
S1205: returning a response to the access device.

### Third embodiment:

The present application is further illustrated by taking that the access device is a CPE (Customer Premise Equipment) device as an example in combination with specific application scenes.

With the rapid development of the Internet, the CPE device has been widely used as a relatively portable communication terminal, but the CPE generally serves as a device used in a relatively narrow environment (such as homes, small cafes, etc.), and the CPE device is generally relatively independent and does not have characteristics of unified management, especially in a case that a plurality of users try to access, as long as these users have authentication information of the current CPE, they can log in, so the security is relatively poor, the authentication information can be changed on the CPE, and when there are many CPEs to perform networking, it seems to be incapable. For these problems, this embodiment proposes a method for managing access of a CPE user based on RADIUS (Remote Authentication Dial In User Service) authentication.

To be specific, as shown in FIG. 13, the management control system provided in this embodiment comprises: a RADIUS server (i.e., the authentication server involved in the above-mentioned embodiments), a plurality of CPE devices (i.e., the access devices involved in the above-mentioned embodiments), and terminal devices of a plurality of users, wherein :
A traditional authentication service process and a general control process run in the RADIUS server, wherein the authentication service process is used to monitor AAA (Authentication, Authorization, Accounting) authentication information transmitted by each CPE device. At the same time, a general control process runs on the RADIUS server, this process is responsible for controlling user information data of all of the CPE devices, and after the authentication of the user information by the authentication service process succeeds, the authentication service process triggers the general control process, and the general control process utilizes VLAN technology (divided by IP multicast, a definition of a VLAN, i.e., it is considered that a multicast group is just a VLAN, and such dividing method expands the VLAN to a wide area network, so such method has a larger flexibility) to send built multicast information to each CPE in the network.

The general control process is used to schedule message process of all of CPE devices, and generally control process of all of events.

Server off-network timer: this timer runs in the server. After the general control process in the server receives an off-network message of a user terminal sent by a CPE monitoring process (running in the CPE device), this timer is started. After the timer reaches a set time, the general control process will broadcast a message in the local area network to delete the user information of the user terminal in all of the CPE devices. If a message of a re-access of the user terminal broadcast by the CPE device is received within the set time, the timer is turned off.

A RADIUS client (authentication client) runs in the CPE device. When a terminal device A logs in to the CPE device, the login username and password will be entered (the username and password will be uniformly managed by a network administrator, and the network administrator needs to set different username parameters, and give them different/same information such as online-time and traffic to access the Internet).

The CPE monitoring process runs in the CPE device. After receiving a multicast packet message sent by the general control process in the RADIUS server, all of the CPE devices parse the packet message to obtain parameter information of login users, a list of the parameter information (i.e., the legal user information list involved in the present application) is shown in Table 1 below, where a ***Device MAC*** (Media Access Control) address is a unique identifier of the device, ***User name*** is a terminal login username, ***Password*** is a password, ***Traffic*** is user's login remaining traffic, which has a unit of mega (M), and ***Time*** is a user's login remaining time, which has a unit of minute (min).

**Table 1**

| **Device MAC** | ***User_name*** | ***Password*** | ***Traffic*** (M) | ***Time*** (mins) |
|---|---|---|---|---|
| 00-23-5A-15-99-42 | iPhone-A | 123456 | 50 | #(no limitation) |
| 6E-2F-4C-16 -24-89 | iPhone-B | Admin | #(no limitation) | 60 |
| 9B-2A-1 B-42 -72-63 | iPhone-C | Mima | 45 | 38 |

A CPE off-network timer runs in the CPE device and is used to calculate whether the time that the user terminal leaves the WIFI network of the device is larger than the first predetermined time period, and if user terminal access information broadcast by the remaining CPE devices in the local area network is not received within the first predetermined time period, the CPE monitoring process of the CPE device will be triggered to send a terminal device off-network message to the general control process of the RADIUS server.

### Uniform processing of traffic and time by the plurality of CPE devices:

For the traffic, the network administrator first sets the initial traffic of each terminal device and notifies all of the CPE devices by broadcasting a message in the local area network by the general control process on the RADIUS server. The CPE device performs initialization and updates the parameters of the user to the legal user information list after obtaining the message. The CPE device utilizes the iptables traffic counting capability of the linux firewall to uniformly monitor the traffic of all of the terminal devices accessing the network, and sets the upper limit of the traffic, and the value is equal to the corresponding value in the traffic. (1) When the traffic of the user exceeds, the network is disconnected, and the CPE monitoring process broadcasts and notifies in the local area network to inform all of the CPE devices to set the traffic value in the user information to zero. (2) When the user disconnects the CPE-1 and the traffic does not exceed the limit at this time, the monitoring process in the CPE-1 reads the user traffic monitored by the iptables process within this time, updates the user information parameter table, and utilizes the VLAN by the monitoring process to broadcast the packet in the local area network, the remaining CPE devices update the user parameter list after receiving the broadcast information, and when entering the coverage area of the remaining CPEs, the user will perform operations such as upper limit setting and traffic counting according to the traffic in the updated user information parameter table.

For the time, the network administrator first sets the initial time to access the Internet of each terminal device and triggers all of the CPE devices by broadcasting a message in the local area network by the general control process on the RADIUS server. The CPE device performs initialization and updates the parameters of the user to the legal user information list after obtaining the message. At this time, each CPE device will start a timer for the user, but the timer is in the wait state. When the user actually accesses a CPE device (e.g., the CPE-1) in the network, the CPE device starts the timer. (1) If the time is up, the monitoring process notifies the device to disable the link for the user. (2) If the time is not up, Case 1: The user leaves the coverage area of the CPE-1 and enters the WIFI coverage area of the CPE-2, the monitoring module receives the terminal access information broadcast by the CPE-2 and sends a pause message to the CPE timer, the timer stops and triggers the monitoring process to update the legal user information list, and then the monitoring process broadcasts an update message in the local area network to notify all of the CPE devices to update the legal user information list. The CPE-2 device starts its own timer and starts timing. Case 2: If the user leaves the local area network, and the CPE-1 does not receive the access message of the user broadcast by the remaining CPE devices within a certain time, the timer is turned off, the user off-network message and the updated user parameter list information are sent and reported to the RADIUS server, and the RADIUS server starts a suspend timer of the user. Case 3: The user re-enters the local area network, the accessed CPE device also sends a username and password authentication request to the RADIUS server, the RADIUS server turns off the suspend timer, sends the authentication success information and the user parameter list to all of the CPE devices for the update of the parameter list, and at this time, the CPE device to which the user makes an access starts the timer to start counting the time to access the Internet.

Switches of users between different small WIFI ranges in a large local area network:
(1) When the user enters the local area network for the first time (assuming that the user first enters the WIFI coverage area of the CPE-1 device), the user terminal first links to the WIFI of the CPE-1 device in the traditional manner of using the SSID and the WIFI password of the WIFI device, but at this time, the CPE device does not network the user terminal, but display the authentication page to require the user terminal device to enter the username and password for authentication, and if the authentication fails, the authentication service process of the RADIUS server triggers the general control process to broadcast a message in the local area network to notify all of the CPEs to shield this user terminal. If the authentication succeeds, the general control process is triggered by the authentication service process of the RADIUS server to broadcast a message in the local area network, which message has the parameter information in the parameter information table of the user terminal (i.e., the terminal MAC address, the login username, the password, the remaining traffic to access the Internet, and the remaining time to access the Internet), and all of the CPE devices will update their own parameter information lists after receiving the message information. For the CPE-1, if the authentication succeeds, the right of the user to access the Internet is turned on, and the right is monitored according to whether the user accesses the Internet based on the traffic or the time.
(2) When the user moves in the local area network, and switches from the WIFI coverage area of the CPE-1 to the WIFI coverage area of the CPE-2, the coverage areas here are not very accurate, and there is inevitably a crossover zone between the coverage areas. When the WIFI signal of the CPE-2 is stronger than the WIFI coverage signal of the CPE-1, the terminal will access the WIFI signal of the CPE-2, after the CPE-2 device successfully links to the user terminal, a broadcast message will be sent in the local area network to request the user parameter information of the user terminal, and after receiving the broadcast message, the CPE-1 will send the parameter information list such as the remaining traffic and the remaining time that are previously counted to the CPE-2 device. The CPE-2 device will update the user parameter information table and start monitoring and counting the time and traffic of the user to access the Internet.
(3) When leaving the local area network, the user moves out of the WIFI coverage area of the CPE-2, in this case, if the CPE-2 device does not find the user terminal and does not receive the user terminal access message broadcast by the remaining CPE devices in the local area networks within a certain time (this time is just the disconnection time commonly used by the current WIFI), it is considered that the user has left the local area network and information is sent the RADIUS server, the RADIUS server suspends the user and starts a suspend timer, and when the user does not re-access the CPE device in the local area network before the time of the timer is up, it is considered that the user has left, and broadcast information will be sent to clear the information of the user on all of the CPE devices.
(4) When the user re-enters the local area network, the operation step is similar to the step (1), it is also required to re-enter the username and password, the CPE sends the username and password for authentication, and when the RADIUS server performs authentication, it notifies all of the CPEs by broadcasting a message to obtain the parameter information table of the user.

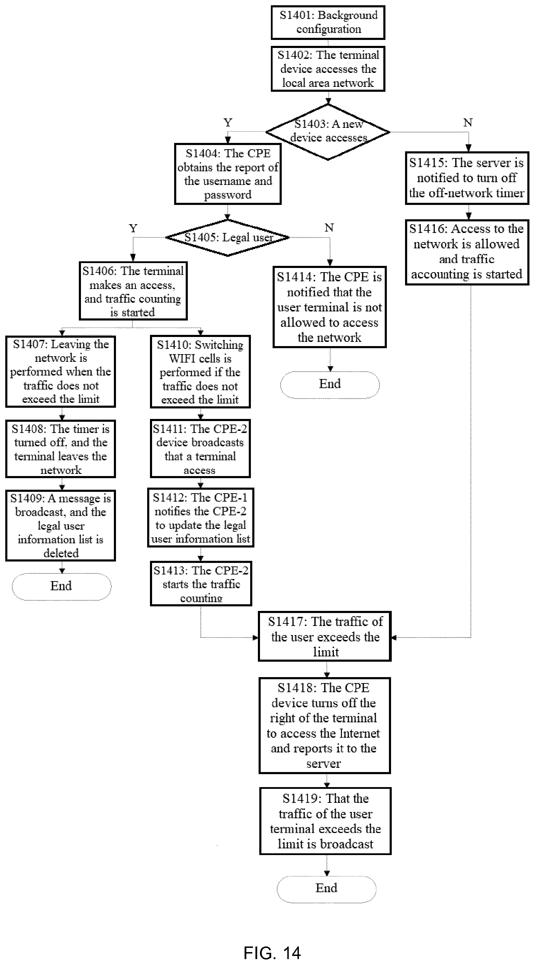

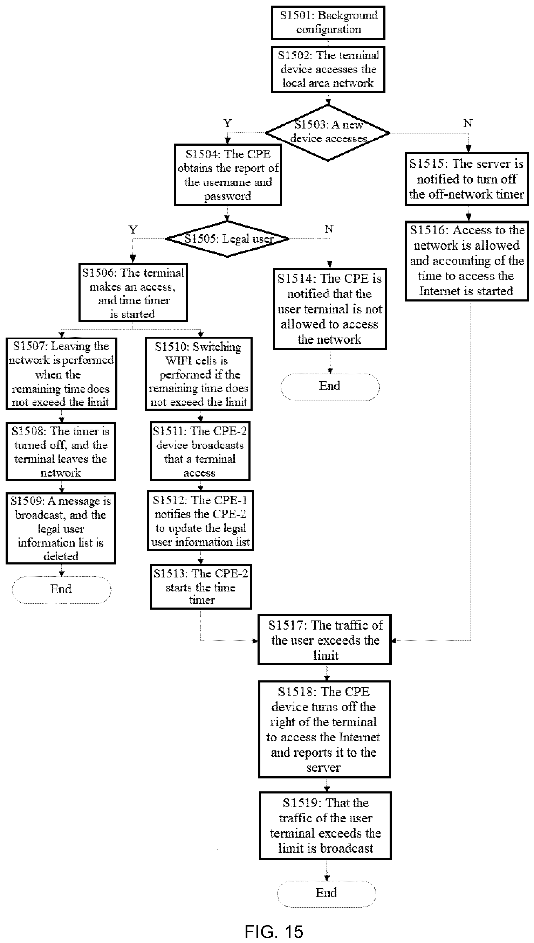

On the basis of the above-mentioned descriptions, a specific implementation of the present application is described in combination with FIGS. 14 and 15.

FIG. 14 is a flow chart of the user terminal to access the Internet based on traffic accounting. It can be seen from FIG. 14 that the method comprises:
S1401: The network administrator performs parameter configuration of the user terminal to make an access on the server, configures the username and password that is allowed to make an access by the authentication service process, and configures the parameter information (the MAC address, the username, the password, and the remaining traffic to access the Internet) of the user by the general control process;
S1402: The terminal device accesses the local area network, and obtains the device identifier;

The user terminal first accesses the WIFI of the CPE-1 device by the CPE-1 device (for example, any CPE device in the network) to obtain the device identifier;
S1403: It is determined whether the user terminal is a new user terminal that makes an access; the step is mainly implemented according to a legal user device identifier list maintained by each access device; if it is a new device, the step S1404 is performed; if the terminal device leaves the local area network for a short time period before, and returns to the local area network within the time of the server off-network timer, the CPE device will first search in its own legal user information list, it is considered that the device terminal is not a new device, and the step S1415 is performed;
S1404: The username and password are obtained

At this time, the CPE-1 displays the authentication page, and prompts the terminal user to enter the username and password to be authenticated (i.e., the username and password configured by the network administrator for the user);
S1405: It is authenticated whether the user is a legal user; if the authentication succeeds, the step S1406 is performed; if the authentication fails, the step S1414 is performed;
The RADIUS client in the CPE-1 device uploads the username and password information to the server, and performs the AAA authentication by the RADIUS server;
S1406: If the authentication of the authentication service process in the RADIUS server succeeds, the general control process in the server is first triggered. The general control process queries the parameter information of the user terminal configured by the network administrator and broadcasts the parameter information in the local area network. After receiving the broadcast message, the monitoring process of all of the CPE devices will update its own user parameter information table, and the CPE-1 device utilizes the firewall function to release the user and enable the terminal device to access the network. The function of counting the traffic of the firewall is utilized to count the traffic to access the Internet of the user, and the parameter information table is compared in real time.

S1407-S1409: When the traffic of the user terminal to access the Internet that is counted by the CPE device is smaller than the remaining traffic to access the Internet, and the user directly moves out of the WIFI coverage area of any CPE device in the local area network, the CPE-1 device will start the off-network timer of the user, if no user access message broadcast by another CPE is received within a time of the timer (the time length is equal to the first predetermined time period), the monitoring process sends the user off-network message to the server. After receiving the off-network user message sent by the CPE, the general control process of the server starts the server off-network timer (the time length is equal to the second predetermined time period), calculates the time length since the user terminal leaves the local area network, and turns off the timer if receiving a message that the terminal accesses the network broadcast by the CPE in the network within the specified time period. If the message that the terminal accesses the network broadcast by the CPE is not received within the specified time period, the general control process broadcasts a user off-network acknowledgment message, and triggers all of the CPE devices in the network to delete the information of the terminal in the user information list, so an end comes.

S1410-S1413: When the traffic of the user terminal to access the Internet that is counted by the CPE device is smaller than the remaining traffic to access the Internet, and the user moves from the WIFI coverage area of the CPE-1 device to the WIFI coverage area of the CPE-2 device, the CPE-1 device will start an off-network timer, and at this time, the CPE-2 device will receive a WIFI access request sent by the device, the WIFI module sends an authentication request to the monitoring process of the CPE-2 device, and the monitoring process queries its own user information list. If it is present, the monitoring process of the CPE-2 device broadcasts the access message of the user terminal in the local area network. The monitoring process of the CPE-1 device (the message is omitted for the other devices) in the local area network, after receiving the access information of the user terminal, turns off the right of the user terminal to access the Internet and stops the traffic counting on the CPE-1, and turns off the off-network timer. The remaining traffic in the user information list is updated, and a message containing the updated user information list is sent to the CPE-2 device. Upon receiving the message containing the user information sent by the CPE-1, the CPE-2 device first updates its own list of user status messages. Then the right of the user to access the Internet is turned on, the function of counting the traffic of the firewall is utilized to count the traffic of the user to access the Internet, and the parameter information table is compared in real time.

S1414: If the authentication of the authentication service process in the server fails, the CPE device is notified that the user terminal is not allowed to access.

S1415-S1416: The server is notified to turn off the off-network timer; access to the network is allowed and traffic accounting is started.

Here, if the terminal device leaves the local area network for a short time period before, and returns to the local area network within a time of the server off-network timer, the CPE device will first search in its own legal user information list, and if it is present, the username and password are not required to be authenticated, and the step S1416 is directly performed (equivalent to the step S1406).

S1417-S1419: When the traffic of the user terminal to access the Internet that is counted by the CPE device is larger than or equal to the remaining traffic to access the Internet, the CPE turns off the right of the terminal device to access the Internet, the monitoring process notifies the general control process of the server that the traffic of the terminal device exceeds the limit, the general control process notifies all of the CPEs in the local area network to delete the user information list, and the user goes offline.

FIG. 15 is a flow chart of the user terminal to access the Internet based on time accounting. It can be seen from FIG. 15 that the method comprises:
S1501: The network administrator performs parameter configuration of the user terminal to make an access on the server, configures the username and password that is allowed to make an access by the authentication service process, and configures the parameter information (the MAC address, the username, the password, and the remaining time to access the Internet) of the user by the general control process;
S1502: The terminal device accesses the local area network, and obtains the device identifier;
The user terminal first accesses the WIFI of the CPE-1 device by the CPE-1 device (for example, any CPE device in the network), and obtains the device identifier;
S1503: It is determined whether the user terminal is a new user terminal that makes an access; the step is mainly implemented according to a legal user device identifier list maintained by each access device; if it is a new device, the step S1504 is performed; if the terminal device leaves the local area network for a short time period before, and returns to the local area network within the time of the server off-network timer, the CPE device will first search in its own legal user information list, it is considered that the device terminal is not a new device, and the step S1515 is performed;
S1504: The username and password are obtained;
At this time, the CPE-1 displays the authentication page, and prompts the terminal user to enter the username and password to be authenticated (i.e., the username and password configured by the network administrator for the user);
S1505: The RADIUS server authenticates whether the user is a legal user; if the authentication succeeds, the step S1506 is performed; if the authentication fails, the step S1514 is performed;
The RADIUS client in the CPE-1 device uploads the username and password information to the server, and performs the AAA authentication by the authentication service process in the RADIUS server;
S1506: If the authentication succeeds, the authentication service process in the RADIUS server first triggers the general control process in the server. The general control process queries the parameter information (the MAC address, the username, the password, and the remaining time to access the Internet) of the user terminal configured by the network administrator and broadcasts the parameter information in the local area network. After receiving the broadcast message, the monitoring process of all of the CPE devices will update its own user parameter information table, and the CPE-1 device utilizes the firewall function to release the user and enable the terminal device to access the network. An on-network timer is started to perform timing of the access time of the user, and compare the access time with the parameter information table in real time.

S1507-S1509: When the time of the user terminal to access the Internet that is counted by the CPE device is smaller than the remaining time to access the Internet, and the user directly moves out of the WIFI coverage area of any CPE device in the local area network, the CPE-1 device will start the off-network timer of the user, if no user access message broadcast by another CPE is received within a time of the timer, the monitoring process sends the user off-network message to the server. After receiving the off-network user message sent by the CPE, the general control process of the server starts the server off-network timer, calculates the time length since the user terminal leaves the local area network, and turns off the timer if receiving a message that the terminal accesses the network broadcast by the CPE in the network within the time period. If the message that the terminal accesses the network broadcast by the CPE is not received within the time period, the general control process broadcasts a user off-network acknowledgment message, and notifies all of the CPE devices in the network to delete the information of the terminal in the user information list, so an end comes.

S1510-S1513: When the time of the user terminal to access the Internet that is counted by the CPE device is smaller than the remaining time to access the Internet, and the user moves from the WIFI coverage area of the CPE-1 device to the WIFI coverage area of the CPE-2 device, the CPE-1 device will start an off-network timer, and at this time, the CPE-2 device will receive a WIFI access request sent by the device, the WIFI module sends an authentication request to the monitoring process of the CPE-2 device, and the monitoring process queries its own user information list. If it is present, the monitoring process of the CPE-2 device broadcasts the access message of the user terminal in the local area network. The monitoring process of the CPE-1 device (the message is omitted for the other devices) in the local area network, after receiving the access information of the user terminal, turns off the right of the user terminal to access the Internet and stops the time counting on the CPE-1, and turns off the off-network timer. The remaining time in the user information list is updated, and a message containing the updated user information list is sent to the CPE-2 device. Upon receiving the message containing the user information sent by the CPE-1, the CPE-2 device first updates its own list of user status messages. Then the right of the user to access the Internet is turned on, the on-network timer counts the access time of the user, and compare the access time with the parameter information table in real time.

S1514: If the authentication of the RADIUS server in the server fails, the CPE-1 device is notified that the user terminal is not allowed to make an access.

S1515-S1516: The server is notified to turn off the off-network timer; access to the network is allowed and time accounting is started.

Here, if the terminal device leaves the local area network for a short time period before, and returns to the local area network within the time of the server off-network timer, the CPE device will first search in its own legal user information list, and if it is present, the username and password are not required to be authenticated, and the step S1516 is directly performed (equivalent to the step S1506).

S1517-S1519: When the time of the user terminal to access the Internet that is counted by the CPE device is larger than or equal to the remaining time to access the Internet, the CPE turns off the right of the terminal device to access the Internet, the CPE monitoring process notifies the general control process of the server that the time of the terminal device exceeds the limit, the general control process notifies all of the CPEs in the local area network to delete the user information list, and the user goes offline.

In summary, by means of the implementation of the embodiments of the present application, at least the following beneficial effects exist:
The embodiments of the present application provide an access device, an authentication server, and a method and system for controlling access of a terminal device. The method comprises: obtaining a device identifier when detecting that a terminal device requests to access a wireless local area network according to access parameters of the wireless local area network, determining whether the terminal device is an in-network device, and performing different control operations on the terminal device according to different determination results, for example, directly enabling access of the terminal device if the terminal device is an in-network device, and performing authentication by the authentication server and enabling access of the terminal device only when the authentication succeeds if the terminal device is not an in-network device. In this way, even if wireless parameters of an access device that provides the wireless local area network are leaked, access of an illegal terminal device will be rejected due to failed authentication of the terminal device when the illegal terminal device accesses the wireless local area network using the wireless parameters. The present application solves the problem of low security of a wireless local area network caused by the access parameter leakage, which problem exists in that the existing access device only authenticates the access parameters of the wireless local area network, enabling an illegal user to access the wireless local area network at any time.

Those skilled in the art should understand that embodiments of the present application can be provided as a method, a system, or a computer program product. Thus, the present application can take the form of a hardware embodiment, a software embodiment, or an embodiment where software and hardware aspects are combined. Moreover, the present application can take the form of a computer program product implemented on one or more computer-usable storage media (including but not limited to a disk memory, an optical memory and so on) containing computer usable program codes.

The present application is described with reference to flowcharts and/or block diagrams of the method, the device (system), and the computer program product according to embodiments of the present application. It should be understood that each flow and/or block in the flowcharts and/or block diagrams, and a combination of flows and/or blocks in the flowcharts and/or block diagrams can be achieved by computer program instructions. The computer program instructions can be provided for a processor of a general purpose computer, a special purpose computer, an embedded processor, or other programmable data processing devices to produce a machine, so that the instructions executed by the processor of the computer or the other programmable data processing devices produce an apparatus for achieving functions specified in one or more flows in the flowcharts and/or one or more blocks in the block diagrams.

The computer program instructions can be also stored in a computer-readable memory that can direct a computer or other programmable data processing devices to operate in a particular manner, so that the instructions stored in the computer-readable memory produce an article of manufacture comprising an instructing means, which achieves functions specified in one or more flows in the flowcharts and/or one or more blocks in the block diagrams.

The computer program instructions can be also loaded into a computer or other programmable data processing devices, so that a series of operational steps are performed on the computer or the other programmable devices to produce computer-implemented processing, whereby the instructions executed on the computer or the other programmable data processing devices provide steps for achieving functions specified in one or more flows in the flowcharts and/or one or more blocks in the block diagrams.

The above-mentioned contents are only specific implementations of the present application, and are not intended to make any form of limitation to the present application, and any simple modifications, equivalent changes, combinations or decorations made with respect to the above implementations based on the technical essence of the present application shall belong to the protection scope of the present application.

### Industrial Applicability

The embodiments of the present application obtain a device identifier when detecting that a terminal device requests to access a wireless local area network according to access parameters of the wireless local area network, determine whether the terminal device is an in-network device, and perform different control operations on the terminal device according to different determination results, for example, directly enabling access of the terminal device if the terminal device is an in-network device, and performing authentication by the authentication server and enabling access of the terminal device only when the authentication succeeds if the terminal device is not an in-network device. In this way, even if wireless parameters of an access device that provides the wireless local area network are leaked, access of an illegal terminal device will be rejected due to failed authentication of the terminal device when the illegal terminal device accesses the wireless local area network using the wireless parameters. The present application solves the problem of low security of a wireless local area network caused by the access parameter leakage, which problem exists in that the existing access device only authenticates the access parameters of the wireless local area network, enabling an illegal user to access the wireless local area network at any time.

## Claims

1. A method for controlling access of a terminal device, comprising:
obtaining a device identifier of the terminal device after detecting an access request of the terminal device to access a wireless local area network;
determining whether the terminal device is an in-network device according to the device identifier of the terminal device and the device identifier of the in-network device; and
performing a control operation corresponding to the determination result on the terminal device.

2. The method for controlling access of a terminal device according to claim 1, wherein the step of performing a control operation corresponding to the determination result on the terminal device comprises:
enabling access of the terminal device to the wireless local area network, and providing a wireless access service for the terminal device when the determination result is that the terminal device is an in-network device.

3. The method for controlling access of a terminal device according to claim 1, wherein the step of performing a control operation corresponding to the determination result on the terminal device further comprises:
obtaining identity authentication information of the terminal device and sending the identity authentication information to an authentication server, when the determination result is that the terminal device is not an in-network device; and
receiving an authentication result returned by the authentication server, enabling access of the terminal device to the wireless local area network and providing a wireless access service for the terminal device, when the authentication result is that the authentication succeeds.

4. The method for controlling access of a terminal device according to any one of claims 1 to 3, wherein before determining whether the terminal device is an in-network device, the method further comprises:
receiving a legal user information list delivered by the authentication server, the legal user information list including at least one legal user information item, the at least one legal user information item includes a device identifier of a legal user; and
using the device identifier of the legal user as the device identifier of the in-network device.

5. The method for controlling access of a terminal device according to claim 4, wherein after providing a wireless access service for the terminal device, the method further comprises:
detecting whether the terminal device leaves the wireless local area network;
determining whether terminal access information forwarded by the authentication server is received within a first predetermined time period after detecting that the terminal device leaves the wireless local area network, wherein the terminal access information is generated after other access devices forming a public local area network provide the wireless access service for the terminal device, and the public local area network is formed by wireless local area networks provided by at least two access devices;
considering that the terminal device leaves the public local area network and sending a user off-network message to the authentication server, if the terminal access information is not received, the user off-network message being used to trigger the authentication server to determine whether the terminal device re-accesses the public local area network within a second predetermined time period; and
replacing the stored legal user information list with a new legal user information list if the new legal user information list fed back by the authentication server is received.

6. A method for controlling access of a terminal device, comprising:
obtaining a device identifier of an in-network device; and
sending the device identifier of the in-network device to an access device of a public local area network, the public local area network being formed by wireless local area networks provided by at least two access devices.

7. The method for controlling access of a terminal device according to claim 6, **characterized in that** the step of sending the device identifier of the in-network device to an access devices of a public local area network comprises:
determining the access devices forming the public local area network;
constructing a legal user information list including at least one legal user information item, the legal user information item including a device identifier of a legal user; and
sending the legal user information list to the access device.

8. The method for controlling access of a terminal device according to claim 7, wherein after sending the legal user information list to the access device, the method further comprises:
receiving a user off-network message sent by the access device;
determining whether a terminal device corresponding to the user off-network message re-accesses the public local area network within a second predetermined time period;
if not, deleting the legal user information item matching the device identifier in the legal user information list, and generating a new legal user information list; and
sending the new legal user information list to the access device.

9. The method for controlling access of a terminal device according to any one of claims 6 to 8, wherein the device identifier of the in-network device comprises:
receiving a device identifier of a legal user configured by an administrator as the device identifier of the in-network device; and/or
receiving identity authentication information sent by the access device, authenticating the identity authentication information, and using the device identifier corresponding to the identity authentication information as the device identifier of the in-network device if the authentication succeeds.

10. A method for controlling access of a terminal device, comprising:
an authentication sever obtaining a device identifier of an in-network device, and sending the device identifier of the in-network device to an access device of a public local area network, the public local area network being formed by wireless local area networks provided by at least two access devices; and
the access device obtaining a device identifier of the terminal device after detecting an access request of the terminal device to access a wireless local area network, determining whether the terminal device is an in-network device according to the device identifier of the terminal device and the device identifier of the in-network device, and performing a control operation corresponding to the determination result on the terminal device.

11. An access device, comprising: a communication module and a processor, wherein
the communication module is configured to provide a wireless local area network, and communicate with a terminal device and an authentication server; and
the processor is configured to obtain a device identifier of the terminal device after detecting an access request of the terminal device to access a wireless local area network, determine whether the terminal device is an in-network device according to the device identifier of the terminal device and the device identifier of the in-network device, and perform a control operation corresponding to the determination result on the terminal device.

12. The access device according to claim 11, wherein the communication module is configured to receive a legal user information list delivered by the authentication server, the legal user information list including at least one legal user information item, which includes a device identifier of a legal user, and use the device identifier of the legal user as the device identifier of the in-network device.

13. The access device according to claim 11 or 12, wherein the processor is further configured to, after providing a wireless access service for the terminal device, detect whether the terminal device leaves the wireless local area network; determine whether the communication module receives terminal access information forwarded by the authentication server within a first predetermined time period after detecting that the terminal device leaves the wireless local area network, wherein the terminal access information is generated after other access devices forming a public local area network provide the wireless access service for the terminal device, and the public local area network is formed by wireless local area networks provided by at least two access devices; consider that the terminal device leaves the public local area network and send a user off-network message to the authentication server by the communication module, if the terminal access information is not received, the user off-network message being used to trigger the authentication server to determine whether the terminal device re-accesses the public local area network within a second predetermined time period; and replace the stored legal user information list with a new legal user information list if the new legal user information list fed back by the authentication server is received by the communication module.

14. An authentication server, comprising: an authentication module and a processor, wherein
the authentication module is configured to communicate with the access device; and
the processor is configured to obtain a device identifier of an in-network device, and send the device identifier of the in-network device to an access device of a public local area network, the public local area network being formed by wireless local area networks provided by at least two access devices.

15. The authentication server according to claim 14, wherein the processor is configured to: determine the access devices forming the public local area network; construct a legal user information list including at least one legal user information item, the legal user information item including a device identifier of a legal user; and send the legal user information list to the access device.

16. The authentication server according to claim 15, wherein the processor, after sending the legal user information list to the access device, is further configured to: receive a user off-network message sent by the access device; determine whether a terminal device corresponding to the user off-network message re-accesses the public local area network within a second predetermined time period; if not, delete the legal user information item matching the device identifier in the legal user information list, and generate a new legal user information list; and send the new legal user information list to the access device.

17. The authentication server according to any one of claims 14 to 16, wherein the authentication module is configured to: receive a device identifier of a legal user configured by an administrator as the device identifier of the in-network device; and/or receive identity authentication information sent by the access device, authenticate the identity authentication information, and use the device identifier corresponding to the identity authentication information as the device identifier of the in-network device if the authentication succeeds.

18. A system for controlling access of terminal device, comprising: an authentication server according to any one of claims 14 to 17 and a plurality of access devices, wireless local area networks of the plurality of access devices forming a pubic local area network; and at least one of the plurality of access devices being the access device according to any one of claims 11 to 13, wherein
the authentication server is configured to obtain a device identifier of an in-network device, and send the device identifier of the in-network device to an access device of a public local area network; and
the access device is configured to obtain a device identifier of the terminal device after detecting an access request of the terminal device to access a wireless local area network, and perform a control operation corresponding to the determination result on the terminal device according to the device identifier of the terminal device and the device identifier of the in-network device.

19. A computer-readable storage medium storing instructions, which when executed by a computer, cause the computer to perform the method for controlling access of a terminal device according to any one of claims 1-5, or the method for controlling access of a terminal device according to any one of claims 6-9, or the method for controlling access of a terminal device according to claim 10.
